Europäisches Patentamt

(19) European Patent Office

Office européen des brevets

(11) Publication number: **0 255 253**
**B1**

(12) # EUROPEAN PATENT SPECIFICATION

(45) Date of publication of the patent specification:
**19.12.90**

(51) Int. Cl.⁵: **F21V 21/26**

(21) Application number: **87306127.9**

(22) Date of filing: **10.07.87**

(54) **Movable stand.**

(30) Priority: **28.07.86 JP 115725/86**
**25.04.87 JP 102602/87**

(43) Date of publication of application:
**03.02.88 Bulletin 88/5**

(45) Publication of the grant of the patent:
**19.12.90 Bulletin 90/51**

(84) Designated Contracting States:
**DE GB IT**

(56) References cited:
**CH-A- 250 203**
**CH-A- 617 761**
**DE-A- 2 535 607**
**DE-A- 2 605 126**
**DE-A- 2 654 334**
**FR-A- 995 126**
**US-A- 2 395 178**
**US-A- 3 973 748**

(73) Proprietor: **MATSUSHITA ELECTRIC WORKS, LTD.,**
**1048, Oaza-kadoma, Kadoma-shi Osaka 571(JP)**

(72) Inventor: **Kuwazima, Takashi, Matsushita Electric**
**Works, Ltd. 1048, Oaza-Kadoma, Kadoma-shi**
**Osaka 571(JP)**
Inventor: **Tanaka, Toshinori, Matsushita Electric Works,**
**Ltd. 1048, Oaza-Kadoma, Kadoma-shi Osaka 571(JP)**
Inventor: **Yamada, Noriyuki, Matsushita Electric Works,**
**Ltd. 1048, Oaza-Kadoma, Kadoma-shi Osaka 571(JP)**
Inventor: **Kato, Akio, Matsushita Electric Works,**
**Ltd. 1048, Oaza-Kadoma, Kadoma-shi Osaka 571(JP)**
Inventor: **Okada, Masao, Matsushita Electric Works,**
**Ltd. 1048, Oaza-Kadoma, Kadoma-shi Osaka 571(JP)**

(74) Representative: **Beresford, Keith Denis Lewis et al,**
**BERESFORD & Co. 2-5 Warwick Court High Holborn,**
**London WC1R 5DJ(GB)**

ACTORUM AG

## Description

### TECHNICAL FIELD

The present invention relates to a movable stand employing a parallel arm assembly, and more particularly to such a movable stand in which one of the parallel arm members is shaped into a tubular configuration in order to conceal therein the other parallel arm member.

### BACKGROUND ART

Movable stands employing a parallel arm mechanism have been conventionally utilized for carrying head units of such as lamps or book holders to be installed adjacent desks, beds or the like places. Such movable stands are disclosed in U.S. Patent Nos. 4 080 530, 4 160 536, 4 165 530 and 4 213 172. In each of these stands a pair of arm members forms an arm assembly in combination with a pair of brackets pivotally connected to each end thereof, the arm assembly additionally including a spring which provides a counterbalancing effect thereon. Any of these prior movable stands, however, employs a parallel crank of a primitive configuration such that a parallelogram structure is explicitly exposed thereby presenting a definite gap between two parallel arm members. An arm assembly having such a primitive configuration inherently accompanies the characteristics thereof which determines that the gap width between arms varies as the arm assembly swings. The gap width practically reaches its maximum when the arm assembly extends vertically and the gap is gradually reduced as the reclining angle is increased until it reaches its minimum when the arm assembly extends horizontally. The variations in the width of the exposed gap between the arms during the swing motion of the arm assembly results in a constant danger that a user's fingers will be pinched between the two parallel arm members when trying to adjust the angular position of the movable stand from an upright position to a horizontal position with the attendant narrowing of the gap. In addition to this serious drawback, the primitive configuration of a parallel arm structure with an exposed gap may, in most instances, result in a clumsy appearance. Furthermore, this unfavourable appearance is even more exaggerated when the gap between the two arm members is made greater for the purpose of reducing the risk of finger entrapment.

The European Search Report: has revealed DT 2 605 126 Al (Thiele) and the disclosure thereof forms the basis for the preamble of the main claim herein.

### DISCLOSURE OF THE INVENTION

According to the present invention there is provided a movable stand comprising: a pair of arms and a pair of brackets pivoted together so as to form an arm assembly, means to attach one of the brackets to a support, object attaching means to attach the other bracket to an object to be supported by the stand, one of the arms being in the form of a sleeve enclosing the other arm, spring means which exerts a counterbalancing. spring force upon the pair of said arms for holding the arm assembly at a desired angular position with respect to the support means, said spring means being enclosed within said one tubular arm with one end anchored to said other arm and the other end being connected to slider means which is slidable lengthwise with respect to said other arm, connecting means connecting the slider means to the adjacent bracket such that when the arm assembly is swung downwardly the spring means is stressed longitudinally of the ot.her arm thereby to transmit to the arm assembly a spring force counterbalancing the gravity force acting on the arm assembly, characterised in that said connecting means connects said slider means to said bracket at an angle with respect to the longitudinal axis of said one arm, and wherein said one arm, said other arm and said connecting means are each pivotally connected to the bracket at respective ones of pivotal connections, said pivotal connection for said other arm being spaced from the pivotal connection for said connecting means and disposed relative thereto on the opposite side of the pivotal connection for said one arm.

With embodiments of this stand, the or each arm assembly presents a single-arm-like structure realising an aesthetic appeal and at the same time giving no externally accessible gap between the arm members which would be otherwise the cause of undesirable finger entrapment.

In addition, the movable stand defined above distinguishes from Thiele in reciting that the connecting means connects the slider means to the first-mentioned bracket at an angle with respect to the longitudinal axis of said one arm. This arrangement, which enhances the ability of the spring means to counterbalance the gravitational forces acting on the arm assembly, is not foreseen by Thiele.

Furthermore, the recited relationship of the aforesaid pivotal connections is particularly advantageous. Embodiments exhibiting these characteristics are found to be particularly well counterbalanced and to operate particularly well. This relationship enhances the generation of force by the spring means to counterbalance the arm assembly. When the spring means is a compression spring, this relationship leads to an increased compression of the spring upon downward movement of the arm assembly and therefore an increased counterbalancing force.

Embodiments of the present invention provide a movable stand in which counterbalancing means is hidden within the arm assembly structure, thereby presenting a smart and stylish design.

Other features of the embodiments of the present invention are set out in the appended claims.

### BRIEF DESCRIPTION OF THE DRAWINGS

Embodiments of the present invention will now be described, by way of example only, with reference to the accompanying drawings, in which:

Fig. 1 is a perspective view of a movable stand in accordance with a first embodiment of the present invention;

Fig. 2 is a front sectional view of the movable stand;

Fig. 3 is an exploded perspective view of a bottom bracket and its associated parts employed in the movable stand;

Figs. 4 and 5 are respectively a front sectional view and a side sectional view of the bottom bracket and the adjacent portion of movable stand;

Fig. 6 is a perspective view showing one of cup-shaped members forming the bottom bracket;

Fig. 7 is a perspective view of a center pin for coupling the cup-shaped members of the bottom bracket;

Figs. 8 and 9 are front sectional views of the lower portion of the movable stand including the bottom bracket shown in its vertically extended position and horizontally extended positions, respectively;

Fig. 10 is an exploded perspective view of a middle bracket and its associated parts employed in the movable stand;

Figs. 11 and 12 are respectively a front sectional view and a side sectional view of the middle bracket and the adjacent portions of the movable stand;

Fig. 13 is an exploded perspective view of a top bracket and its associated parts employed in the movable stand;

Figs. 14 and 15 are respectively a front sectional view and a side sectional view of the top bracket and the adjacent portion of the movable stand;

Fig. 16 is a diagram schematically illustrating the operation of the parallel arms of the movable stand;

Fig. 17 is a diagram schematically illustrating the operation of a compression spring for counterbalancing the arm assembly of the movable stand;

Fig. 18 is a diagram similar to Fig. 17 but additionally illustrating the counterbalancing operation of a compression spring associated with the upper arm of the movable stand;

Fig. 19 is a perspective view of an inner arm and spring combination employed in the movable stand;

Fig. 20 is a perspective view of another inner arm and spring combination as a first alternative to the combination of Fig. 19;

Fig. 21 is a perspective view of yet another inner arm and spring combination as a second alternative to the combination of Fig. 19;

Fig. 22 is a perspective view of the detail of the spring placement in the inner arm of Fig. 21;

Fig. 23 is a perspective view of a disc which may be substituted for the disc of the above middle bracket;

Fig. 24 is a diagram schematically illustrating another counterbalancing mechanism with a tension spring adaptable to the arm assembly of the above movable stand; and

Fig. 25 is a front sectional view of a movable stand of single-arm construction in accordance with a modification of the first embodiment.

## DESCRIPTION OF EMBODINENTS

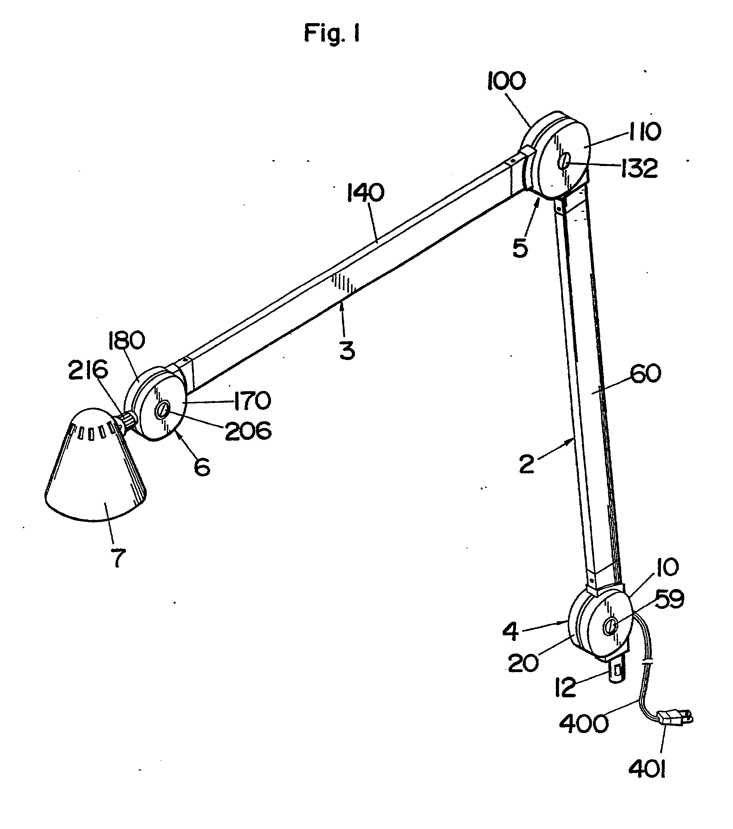

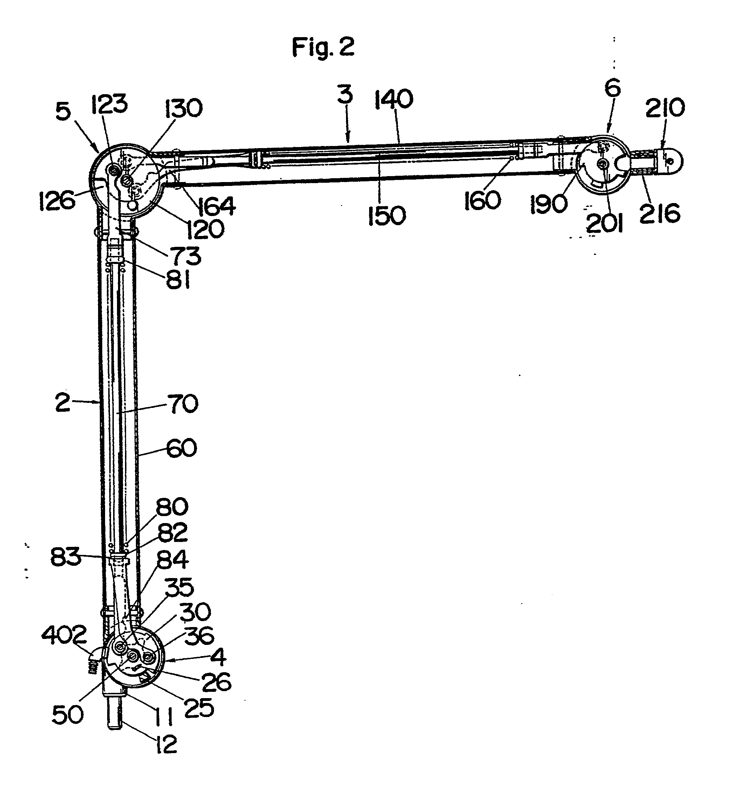

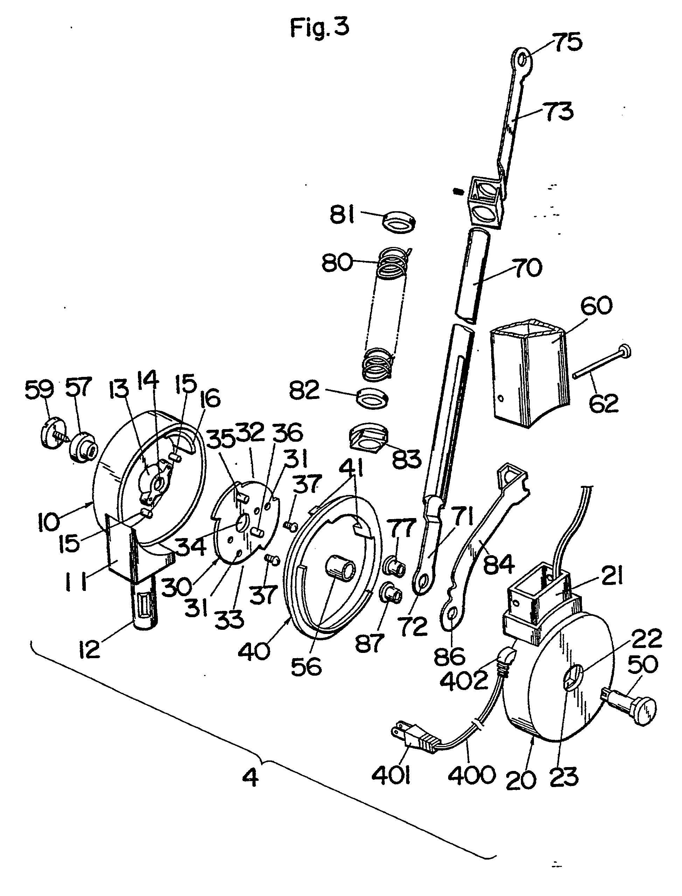

Referring firstly to Fig. 1, a movable stand in accordance with a first embodiment includes first and second arm assemblies 2 and 3 which are articulated to each other through a middle bracket 5. The lower end of the first arm assembly 2 is connected by means of a bottom bracket 4 to a mounting stem 12 which defines a swivel pivot with a suitable mounting base (not shown). The upper end of the second arm assembly 3 is connected through a top bracket 6 to a lamp unit 7. An electric cord 400 with a plug 401 is routed through the inside of the movable stand to supply electric power to lamp unit 7. As depicted in Figs. 2 and 3, the first arm assembly 2 consists basically of an outer arm 60 of tubular configuration and an inner arm rod 70 which are pivoted at their respective ends to bottom and middle brackets 4 and 5 to form the first assembly. Likewise, the second arm assembly 3 consists basically of an outer arm 140 of tubular configuration and an inner arm rod 150 which are pivoted at their respective ends to middle and top brackets 5 and 6 to form the second assembly. In the first and second arm assemblies, counterbalancing springs 80 and 160 are disposed around respective ones of the inner arm rods 70 and 150 for providing a counterbalancing effect upon each of the arm assemblies.

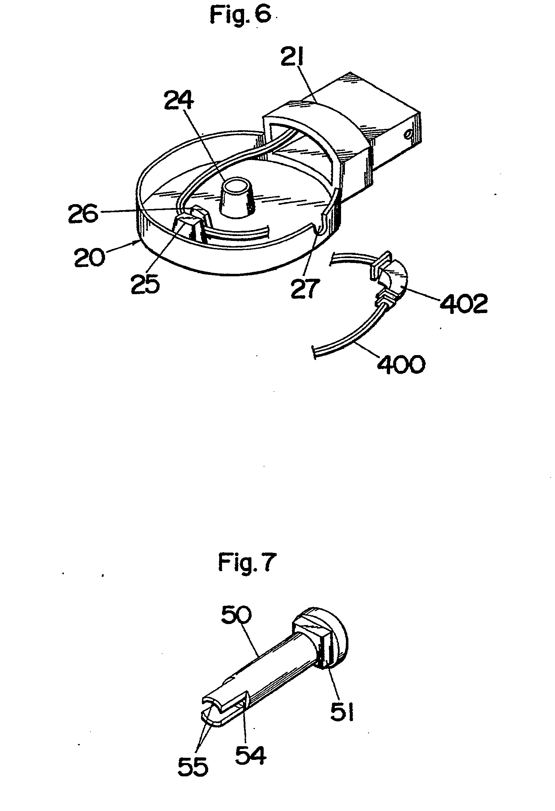

Reference is now made to Figs. 3 to 5 for discussing in detail the connection between bottom bracket 4 and the first arm assembly 2. Bottom bracket 4 comprises a disc 30 and a first pair of opposed cup-shaped bracket members 10 and 20 which each have a generally circular outer configuration and together enclose therebetween disc 30. One bracket member 10 is formed integrally with an extension 11 having the mounting stem 12 projecting outwardly therefrom. On the inner surface of the bracket member 10 there is integrally formed a center boss 13 with an opening 14, a pair of spaced studs 15 and an arcuate projection 16 extending along, and inwardly of, the inner periphery of the surrounding wall. The other bracket member 20 has integrally formed thereon a coupling sleeve 21 projecting outwardly for connection with the outer tubular arm 60 of the first arm assembly 2. The coupling sleeve 21 is inserted into the lower end of tubular arm 60 and secured thereto by a rivet 62 so that the bracket member 20 is movable with the outer tubular arm 60. A central opening 22 with a square-shaped cavity 23 is formed at the center of bracket member 20. Cavity 23 extends into a central boss 24 which itself projects inwardly into the bracket member 20, as best shown in Fig. 6. A stopper projection 25 is also formed at the interior of the bracket member 20. This stopper projection 25 is provided to limit the angular displacement of the bracket member 20 relative to the bracket member 10. Disc 30 is fixed to the bracket member 10. The stopper projection 25 cooperates with an adjacent projection 26 to hold therebetween the electric cord 400. Cord 400 enters the bracket member 20 through a bushing 402, which bushing 402 is located by a notch 27 of the peripheral wall. Cord 400 extends upwardly from the bushing member 20 through the coupling sleeve 21.

The bracket disc 30 is attached to the bracket member 10 by means of the studs 15 which extend in-

to holes in disc 30. It is secured thereto by screws 37 which extend through apertures 31 in disc 30 and engage threaded bores in center boss 13 (Fig. 3). In the periphery of the disc 30 there is formed a pair of diametrically opposed cutouts 32 and 33, one for snugly receiving arcuate projection 16 and the other for receiving therein stopper projection 25. This arrangement allows the above-mentioned limited angular movement of the bracket member 20 relative to the other bracket member 10. A pair of pivot pins 35 and 36 are provided on the disc 30 and arranged to be disposed generally oppositely relative to a central hole 34. These pins 35, 36 together with complementary eyelets (bushes) 77 and 87 fit into eyes (apertures) 72 and 86 respectively formed in the lower ends of inner arm rod 70 and a spring actuator bar 84. This arrangement enables the inner arm rod 70 and the spring actuator bar 8 to be pivotally supported on the disc 30 by respective pivotal connections (35, 36).

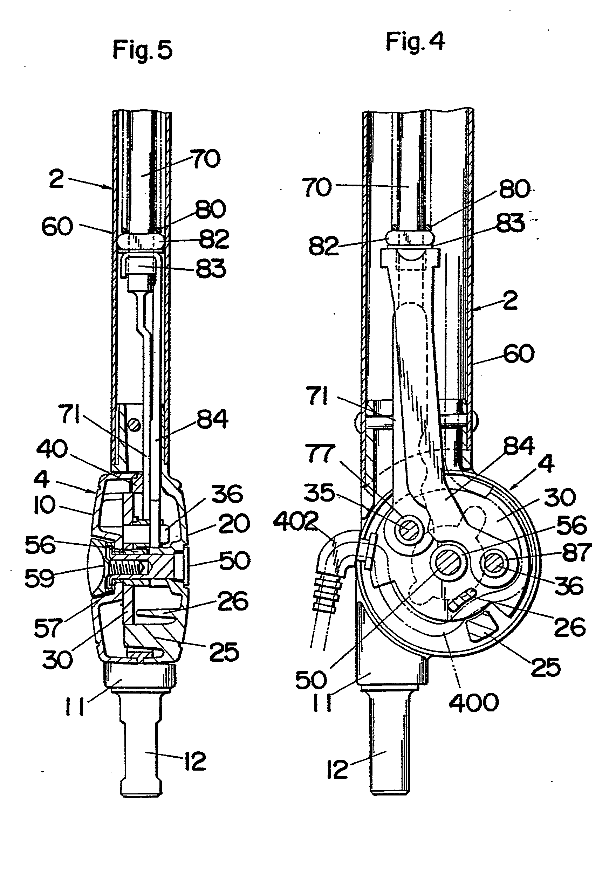

Bracket member 20 is fixed to tubular arm 60 to be movable therewith. It is coupled with bracket member 10 by means of a center pin 50 which extends through the central opening 22, a bearing sleeve 56, which is fitted into the central hole 34 of disc 30, and the opening 14 in bracket member 10. As shown in Fig. 7, the center pin 50 is formed with a square neck 51 adjacent its head, a bifurcated end 55, and has an internal thread 54. The square neck 51 is fitted into the square cavity 23 of the bracket member 20 thereby ensuring that the center pin 51 is rotatable with the bracket member 20 and thus the outer tubular arm 60 also. When an adjusting screw 59, having a slotted head, threadedly engages the center pin 50, its head is seated in a cavity in the outer face of bracket member 10. A collar 57 is interposed between the adjusting screw 59 and the center pin 50. This collar 57 has a flange which rests on the bottom of a cavity in member 10. After insertion into this cavity (Fig. 5), the bifurcated ends 55 of the pin 50 are pressed outwardly thereby to hold bracket members 10 and 20 together.

It should be noted that center pin 50 which coaxially couples the bracket members 10 and 20, is also the means of the pivotal connection of disc 30 or bottom bracket 4 with outer tubular arm 60 for completing the parallel arm of the first arm assembly. This arrangement contributes to a reduction in the number of pivot pins required for the assembly. Further, all the components, which afford the pivotal connection between the disc 30 and its associated members, are concealed between the bracket members 10 and 20 thereby providing a neat finish at the junction between bottom bracket 4 and outer tubular arm 60 as a feature of the outer appearance of the first arm assembly 2.

A friction ring 40 is interposed between the peripheral walls of bracket members 10 and 20. This friction ring 40 is provided with a pair of prongs 41 which are engaged with the opposite ends of arcuate projection 16 of bracket member 10, whereby ring 40 is rotatable therewith. The friction ring 40 provides a friction coupling between bracket member 10 and the other bracket member 2C. This arrangement ensures that a frictional force is exerted between bracket members 10 and 20. This frictional force is additional to the spring force exerted by the counterbalancing spring 80 for balancing the first arm assembly 2 and keeping it at a desired angular position about bottom bracket 4. This frictional force may be easily adjusted by tightening or loosening adjusting screw 59 by means of a screw driver or like.

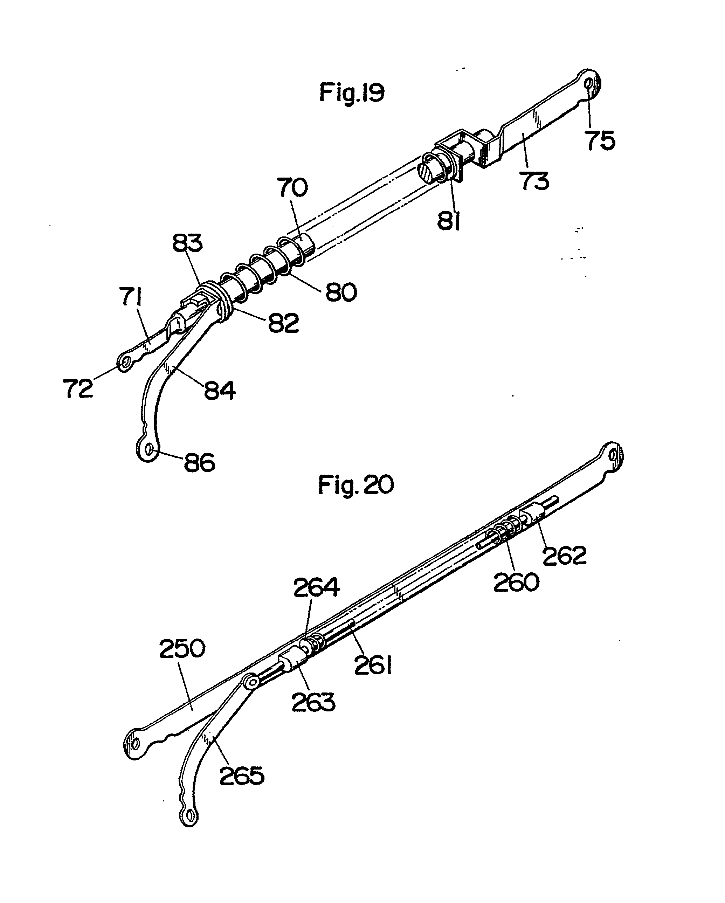

The inner arm rod 70 is formed with a rounded shank and a flat lower end 71. An upper joint member 73 is secured at its bottom to an upper end of the shank of rod 70 by means of a bolt 76. The counterbalancing spring 80, which is a compression spring, is placed around the rounded shank portion of inner arm rod 70. Its upper end is held against the lower end of upper joint member 73 via a bushing 81. The lower end of spring 80 abuts via a bushing 82 against a slider 83. The slider 83 is so mounted on the inner arm rod 70 as to be slidable along the length of the rounded portion thereof, as best shown in Figs. 3 and 19. An upper end of a spring actuator bar 84 is pivotally connected to slider 83. Its lower end is pivoted to the bottom disc 30 by means of the pivot pin 36 and the eyelet 87 which extends into the eye (aperture) 86. The bar 84 has an apertured upper end into which the rounded portion of inner arm rod 70 loosely extends. This arrangement enables the upper end of bar 84 to be movable with slider 83 when the bar 84 is pivoted relative thereto.

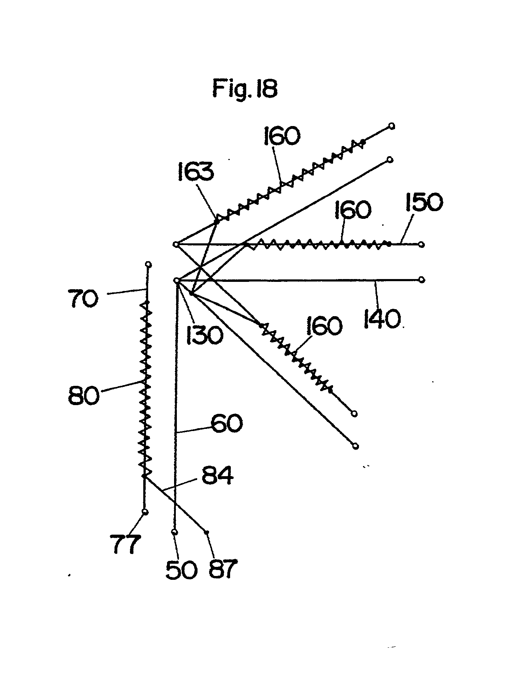

As best shown in Fig. 17, when the first arm assembly 2 swings from its vertical position to a horizontal position, the spring actuator bar 84 correspondingly pivots to push the slider 83 along inner arm rod 70 to thereby compress spring 80. This causes the spring 80 to exert a spring force on the arm assembly which spring force counterbalances the weight of the arm assembly and an associated object supported thereby.

As clearly shown in Fig 17, the spring actuator bar 84 has its lower pivot axis X offset oppositely of the pivot axis A of outer tubular arm 60 relative to the pivot axis B of inner arm rod 70. This arrangement causes the bar 84 to be so inclined relative to the longitudinal axis of outer tubular arm 60 at such an angle as to ensure an increased compression rate of spring 80 as the arm assembly swings downwardly.

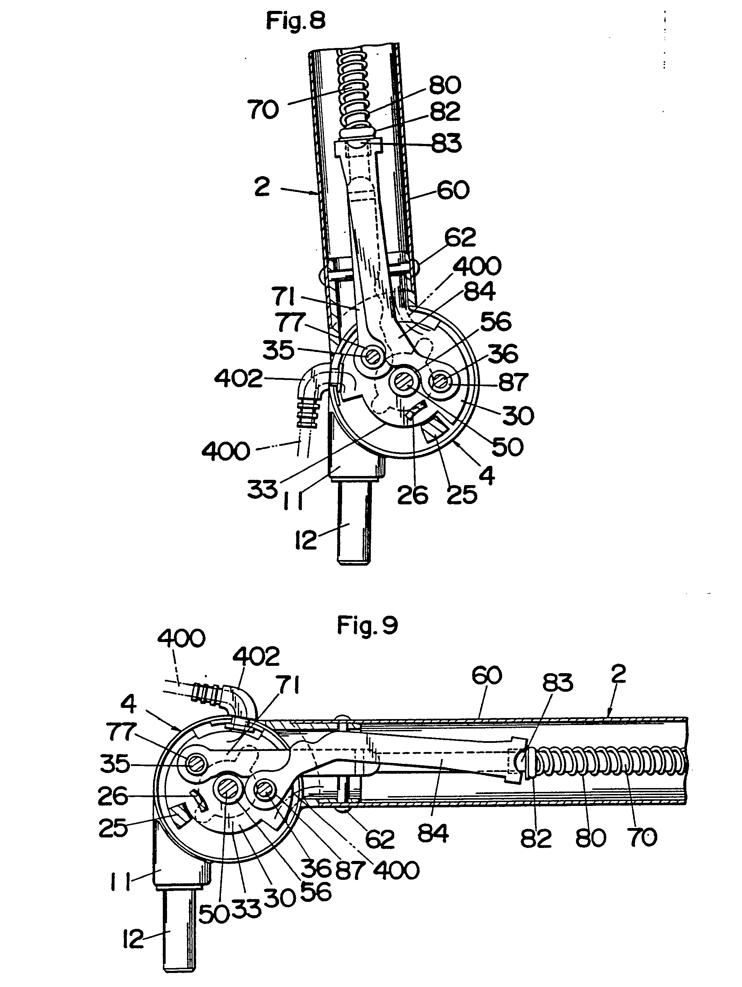

As shown in Figs. 3 to 5, the lower end 71 of inner arm rod 70 and the lower end of spring actuator bar 84, which both extend into the bottom bracket 4, are flat shaped. This configuration of rod 70 and bar 84 enables the thickness of the bottom bracket 4 to be minimised. The lower flat portion of spring actuator bar 84 is arcuately shaped with its convex side located adjacent to the inner arm rod 70. It is situated so that the upper portion thereof overlaps with the inner arm rod 70. This reduces the required width dimension of outer tubular arm 60 to a minimum, while ensuring enough space inside of outer tubular arm 60 to permit the electric cord 400 to pass therethrough without hindrance throughout the range of the swinging movement of arm assembly 2 between a generally upright position of Fig. 8 and a horizontal position of Fig. 9.

The first arm assembly 2 is movable between the positions of Figs. 8 and 9. In each of these positions, the stopper projection 25, which is integral with bracket member 20 and therefore movable with outer tubular arm 60, engages with a corresponding edge of cutout 33 in disc 30. The inside diameter of spring 80 is slightly greater than the outside diameter of the rounded portion of inner arm rod 70 so that it can be compressed lengthwise thereof without accompanying substantial distortion in the lateral direction. Each of bushings 81 and 82 on the ends of spring 80 is kept in a sliding contact with the inner surface; of the pair of opposed walls of arm 60 with the closest spacing, as best shown in Fig. 5. This arrangement allows spring 80 to be guided by these walls along a substantially straight path during its compression stroke. This arrangement also serves to prevent the buckling of inner arm rod 70 during repeated swinging movements of the arm assembly.

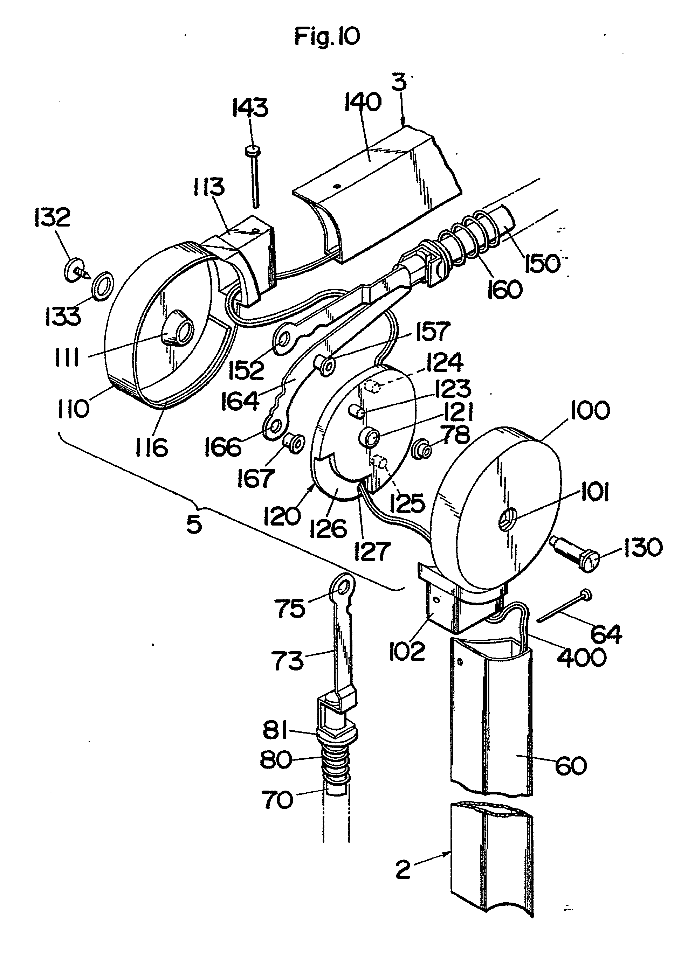

Turning to Figs. 10 to 12, these illustrate the details of the connections of the middle bracket 5 to the first arm assembly 2 and to the second arm assembly 3. The middle bracket 5 comprises a second bracket disc 120 and a second pair of opposed cup-shaped bracket members 100 and 110 which have generally circular outer configuration and which enclose therebetween a disc 120. One bracket member 100 is formed integrally with a coupling sleeve 102 projecting outwardly therefrom. Sleeve 102 is formed for insertion into the upper end of the outer tubular arm 60 of the first arm assembly 2. Sleeve 102 is secured to outer tubular arm 60 by a rivet 64. This arrangement ensures that bracket member 100 is movable with the outer tubular arm 60. Likewise, the other bracket member 110 is formed integrally with a coupling sleeve 113. Sleeve 113 is coupled to the outer tubular arm 140 of the second arm assembly 3 by means of a rivet 143.

The disc 120 is held coaxially between the bracket members 100 and 110 by means of a center pin 130. Pin 130 extends through a central opening 101 in bracket member 100, a flanged central hole 121 in disc 120, and a central boss 111 of bracket member 110. Pin 130 defines a common pivot axis for the outer tubular arm 60 of the first arm assembly 2 and as well for the outer tubular arm 140 of the second arm assembly 3. Thus, the first and second arm assemblies 2 and 3 are allowed to swing or pivot about a common pivot axis defined by the center pin 130. The disc 120 is provided on one face with a pivot pin 123. This pin 123 together with an eyelet 78 is received in an eye (aperture) 75 at the upper end of inner arm rod 70 of the first arm assembly 2. This affords a pivotal connection therebetween. On the other face of second disc 120, a pair of generally diametrically opposed pivot pins 124 and 125 are formed. These pivot pins 123, 125 are inserted together with eyelets 157 and 167 into corresponding eyes 152 and 166, the latter being located at the lower ends of inner arm rod 150 and a spring actuator bar 164. This affords another pivotal connection. Nith these pivotal connections, the disc 120 pivotally supports the upper end of the first arm assembly 2 and the lower end of the second arm assembly 3.

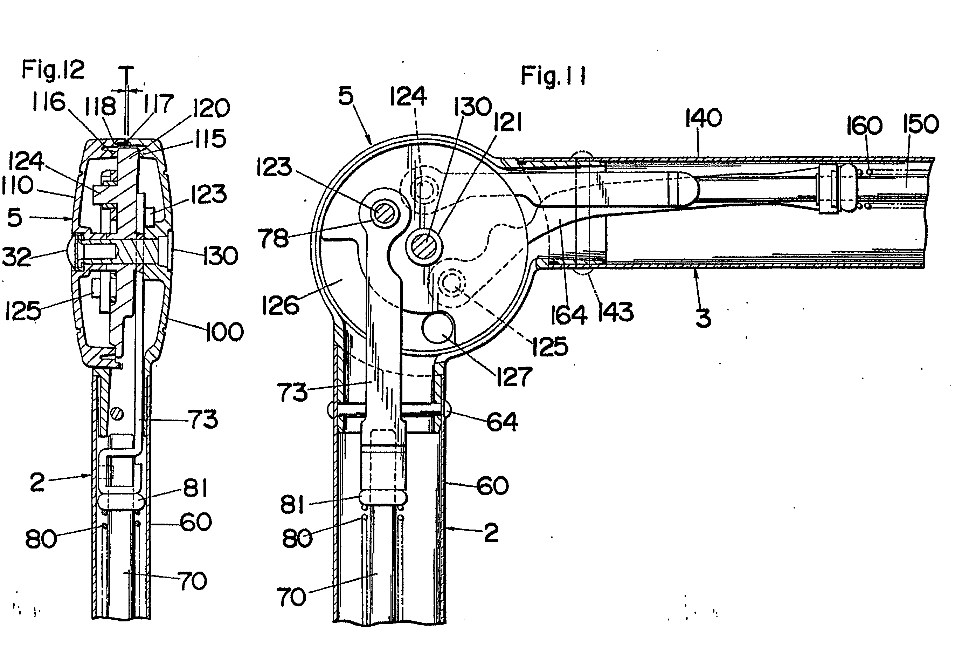

The center pin 130 has a square neck fitted in a correspondingly shaped cavity in the center opening 101 and is thereby movable with the bracket 100. An adjusting screw 132 engages with an internal thread in the end of center pin 130 in order to hold bracket members 100 and 110 together. A washer 133 is interposed between the head of screw 132 and the bottom of a central recess formed in the outer surface of bracket member 110 as the counterpart of central boss 111. As shown in Fig. 12, the disc 120 has its peripheral portion in frictional engagement respectively with arcuate ribs 115 and 116 each projecting interiorly of each of bracket members 100 and 110 in closely spaced relation with the peripheral wall thereof. Thus, disc 120 is rotatable relative to each of bracket members 100 and 110 with a friction fit and it is also floatingly supported between bracket members 100 and 110. The frictional force may be adjusted by means of the screw 132 to be a moderate value such that the middle bracket 5 acts as a floating bracket ensuring a coherent movement of the first and second arm assemblies 2 and 3 throughout the range of the swinging movement thereof.

As shown in Fig. 12, the bracket members 100 and 110 have their peripheral edges separated by a small clearance T. This avoids an additional frictional coupling therebetween. Provision is made to ensure that the interior of middle bracket 5 is not visible through clearance T. For this purpose, a fringe (or skirt) 117 projects from the periphery of bracket member 100 into a mating recess 118 in the periphery of the opposed bracket member 110. The arrangement is such that the fringe 117 bridges the clearance T without causing any direct frictional engagement therebetween.

At its peripheral portion the disc 120 has an arcuate recess 126. A bore 127 is arranged at one circumferential end of recess 126. The bore 127 enables the electric cord 400 to extend upwardly from outer tubular arm 60. The cord 400 passes through the bore 127 into outer tubular arm 140 of the second arm assembly 3. A portion of cord 400 is guided along the arcuate recess 126. The inner arm rod 150, spring actuator bar 164, and compression spring 160 of the second arm assembly 3 each have an identical construction and function to those of the first arm assembly 2. Therefore, no further explanation thereof is deemed necessary.

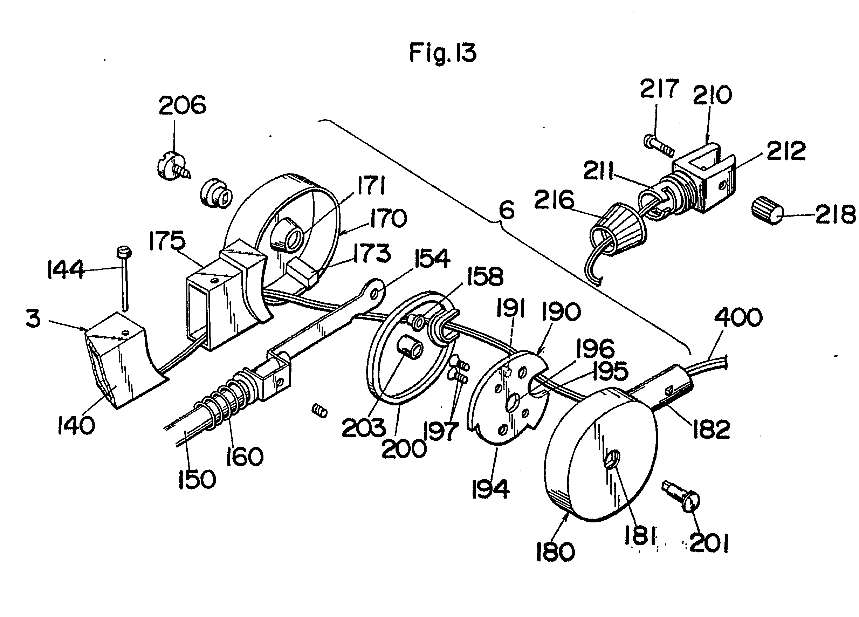

Referring to Figs. 13 to 15, the top bracket 6 comprises a third disc 190 and a third pair of opposed cup-shaped bracket members 170 and 180. Members 170, 180 each have generally circular outer configuration and together they enclose therebetween the disc 190. The bracket member 170 is formed integrally with a coupling sleeve 175. This sleeve 175 is inserted into the upper end of the outer tubular arm 140 of the second arm assembly 3. It is secured thereto by a rivet 144 so that it is movable with outer tubular arm 140. The other bracket member 180 has an integral support 182 which enables a connection to be made to an end attachment 210 supporting the lamp unit 7. The disc 190 is attached to the bracket member 180 by screws 197, in the same manner as in bottom bracket 4. The disc 190 carries a pivot pin 191 which is spaced radially outwardly relative to a central hole 196. This pin 191 together with an eyelet 158 is received in an eye 154 at the upper end of inner arm rod 150. This arrangement makes a pivotal connection.

The bracket members 170 and 180 with disc 190 interposed therebetween are connected by means of a center pin 201. Pin 201 passes through bearing sleeve 203 and an adjusting screw 206. These components 201, 203 and 206 are each identical in structure and function to the correponding parts 50, 56 and 59 in bottom bracket 4. Center pin 201 extends through a central opening 181 of bracket member 180, through bearing sleeve 203 (which fits in the central hole 196 of disc 190), and through a central boss 171 of the bracket member 170. A friction ring 200 is located between the peripheries of bracket members 170 and 180. This ring 200 provides a frictional coupling between bracket members 170 and 180. The force of this friction coupling may be adjusted for the purpose of properly balancing the weight of the second arm assembly 3 and lamp unit 7 supported thereby with the effect of the counterbalancing spring 160. On an internal portion of its peripheral wall, the bracket member 170 is provided with an integral stopper (or abutment) 173. This stopper co-operates with an arcuate notch 194 formed in the periphery of disc 190 thereby to limit the angular movement of the bracket member 180 and therewith the mounting lamp unit 7 relative to the bracket member 170 and thereby the second arm assembly 3. The electric cord 400 extends out of the outer tubular arm 140 and it is then routed through a notch 195 in the disc 190, through support 182, and through an end attachment 210 to the lamp unit 7.

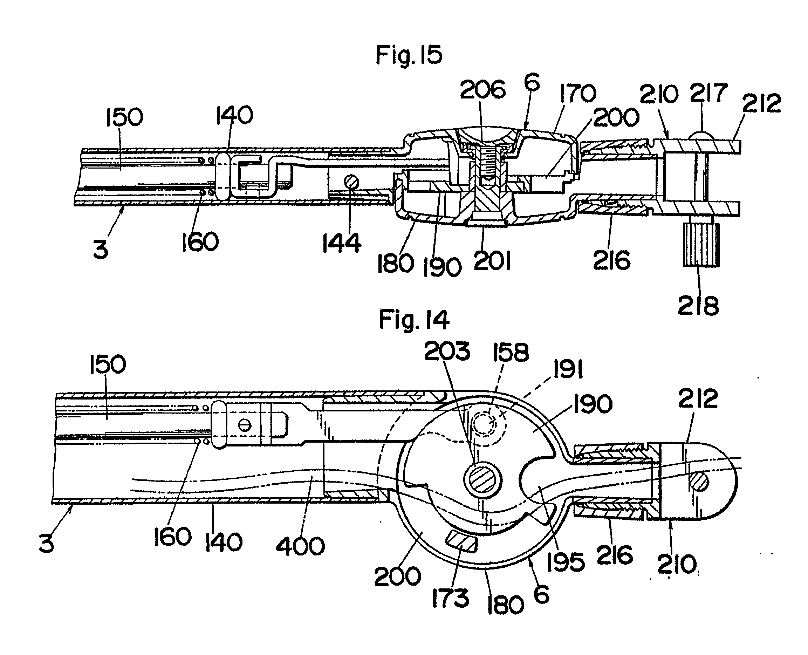

The end attachment 210 includes a hinge joint 212 which has an externally threaded pipe 211. This pipe 211 is compressible so as to contract in diameter when a tapered unit is applied thereto. As shown in Figs. 14 and 15, the pipe 211 will tightly grip the support 182 when inserted therein and when thereafter the tapered nut 216 is tightened on pipe 211. This enables a secure connection thereof to the top bracket 6. The hinge joint 212 has a nut 218 and bolt 217 for mounting the lamp unit 7.

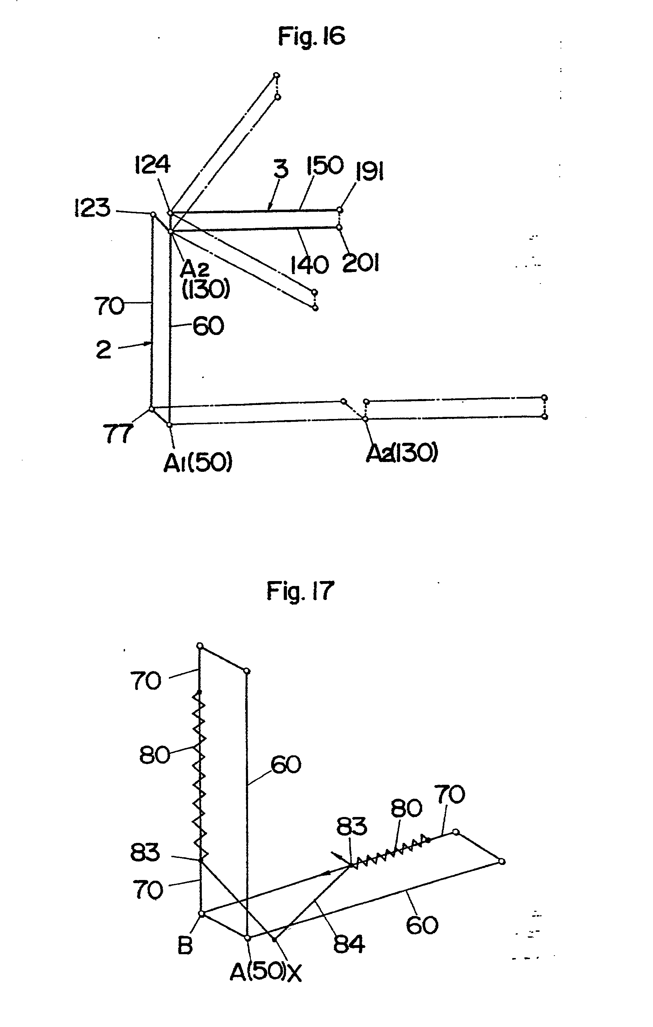

As schematically shown in Fig. 16, in the movable stand thus constructed, the first and second arm assemblies 2 and 3 are allowed to swing in association with each other into positions indicated by solid and dotted lines while pivoting about corresponding pivot axes A1 and A2 defined by center pins 50 and 130, respectively. Fig. 18 which is similar to Fig. 17, shows how the compression spring 160 is compressed as the second arm assembly 3 swings downwardly to effect a counterbalancing effect thereon.

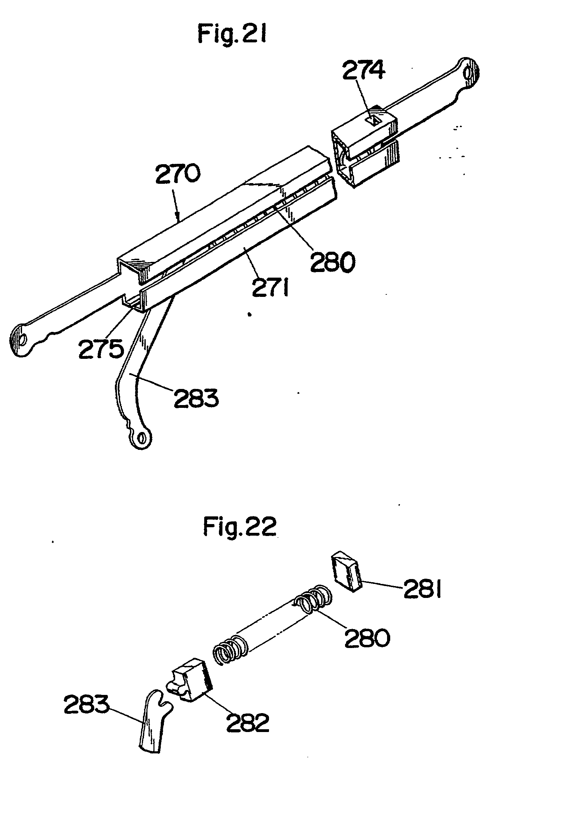

Figs. 20 and 21 each show another form of an inner arm and spring combination, each of which may be substituted for the combination of Fig. 19. The combination of Fig. 20 includes an inner arm bar 250 of flat shape, with a pair of bearing blocks 262 and 263 arranged in longitudinally spaced relation and mounted on one side thereof. A shaft 261 extends in parallel-relation with the inner arm bar 250 and through bearing blocks 262 and 263, by which it is slidably supported. A compression spring 260 is arranged on shaft 261 and disposed with one end held against bearing block 262 and with the other end held against a bushing 264. This bushing 264 is fixed to the shaft 261 inwardly of the other bearing block 263. The end of shaft 261 adjacent the bushing 264 is pivoted to one end of a spring actuator bar 265. The arrangement is such that when the actuator bar 265 is pivoted, then it pushes the shaft 261 and the bushing 264 thereon in the direction of compression spring 260. The bar 265 is caused to pivot about its other end during a downward swinging movement of the corresponding arm assembly. This displacement of spring 260 gives rise to the equivalent counterbalancing effect.

In the combination of Fig. 21, an inner arm 270 is formed along a middle portion thereof with an integral sheath 271 for accommodating therein a compression spring 280. The sheath 271 also encloses a stop pad 281 and a shoe 282 between which the spring 280 is compressed, as shown in Fig. 22. The stop pad 281 is held against an inwardly directed projection 274 at one end of sheath 171. The shoe 282 is located so as to be slidable within and along the length of the sheath 171. A spring actuator bar 283 has a portion which extends into sheath 271 through a slit 275 therein. This bar 283 is arranged to be pivotally connected to the shoe 282 in such manner that it may push the shoe 282 to compress the spring 280. This compression occurs when actuator bar 283 pivots about the other end during the downward swinging movement of the arm assembly.

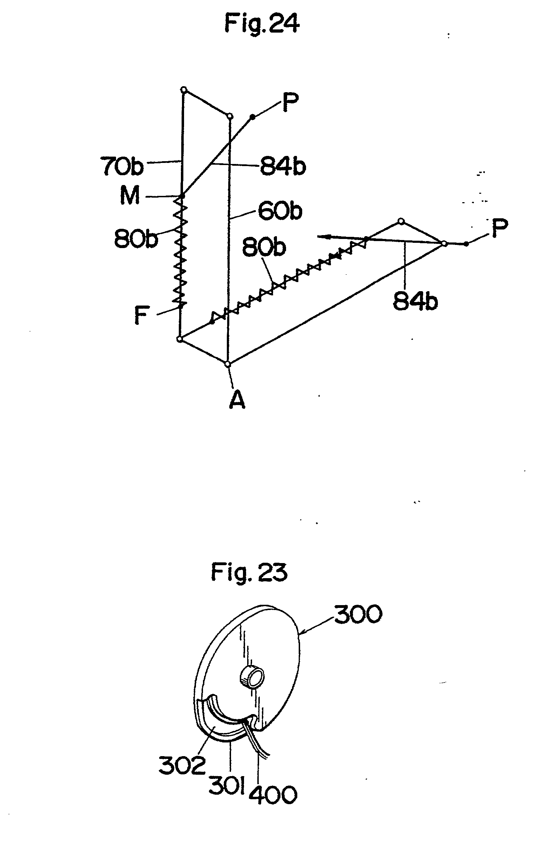

Fig. 23 shows a modified form of a bracket disc 300 which may be substituted for the disc 120 of the middle bracket 5. The disc 300 is formed with an elongated slot 302 which extends in a correspondingly arcuate recess 301 in the peripheral portion of the disc 300. The slot 302 receives the electric cord 400 and allows it to be freely movable therein. This arrangement is effective for protecting cord 400 from being damaged during articulated movement of the adjacent arm assemblies relative to disc 300. In the figure, the disc 300 is illustrated, for the sake of simplicity only, without associated pivot pins.

A modified form of a counterbalancing mechanism is shown schematically in Fig. 24. This mechanism may be used in either of the first or the second arm assembly above described. In this modification, a tension spring 80b is employed instead of a compression spring 80. This spring 80b has one end fixed at F to the lower end of an inner arm member 70b and it has the other end M mounted to be slidable along the length thereof. The other end M of spring 80b is pivotally connected to one end of a spring actuator 84b. This actuator 84b is inclined at an angle with respect to the longitudinal axis of an outer tubular arm 60b and it is pivotally supported at point P by means of an associated bracket (not shown). With this arrangement, when the arm assembly swings downwardly about a pivot A, the spring actuator 84b is caused to pivot about point P in a clockwise direction in the figure. This causes the spring 80b to expand so as to provide a counterbalancing effect upon the arm assembly.

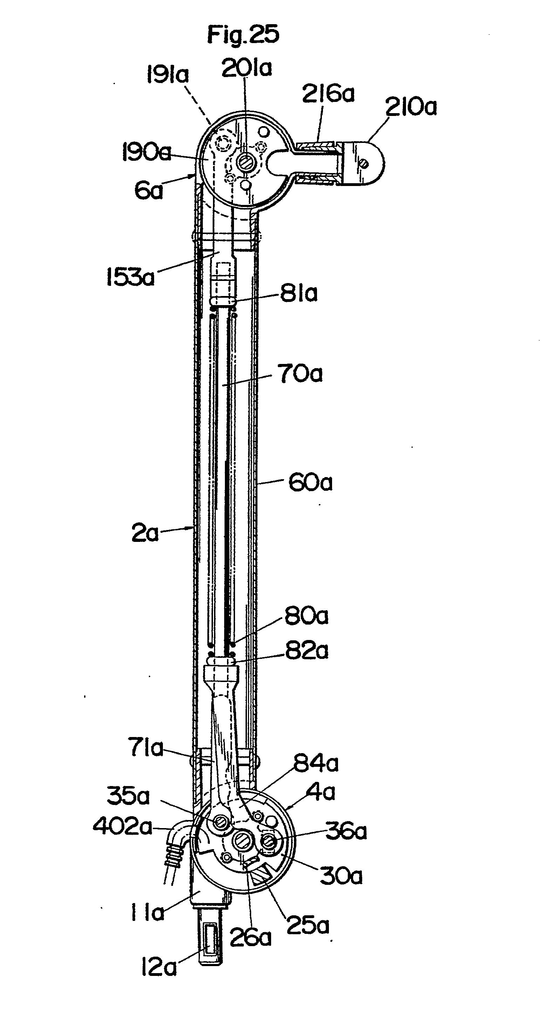

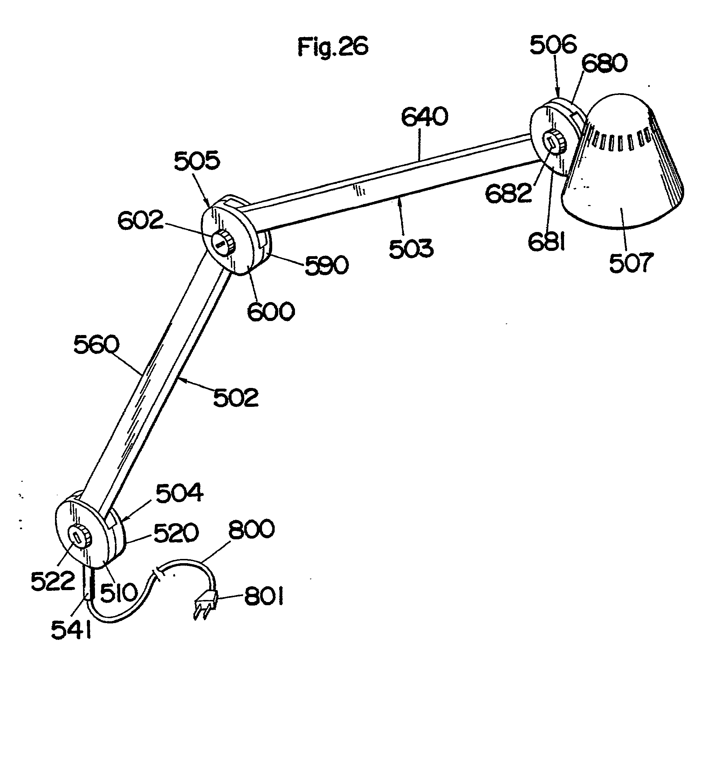

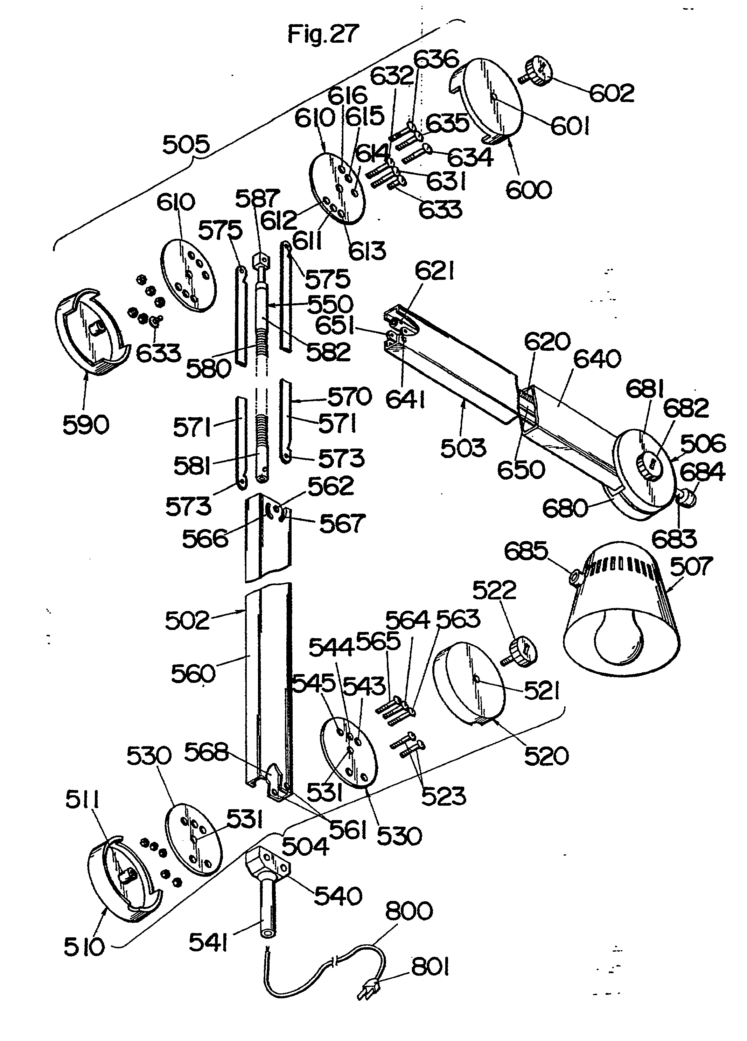

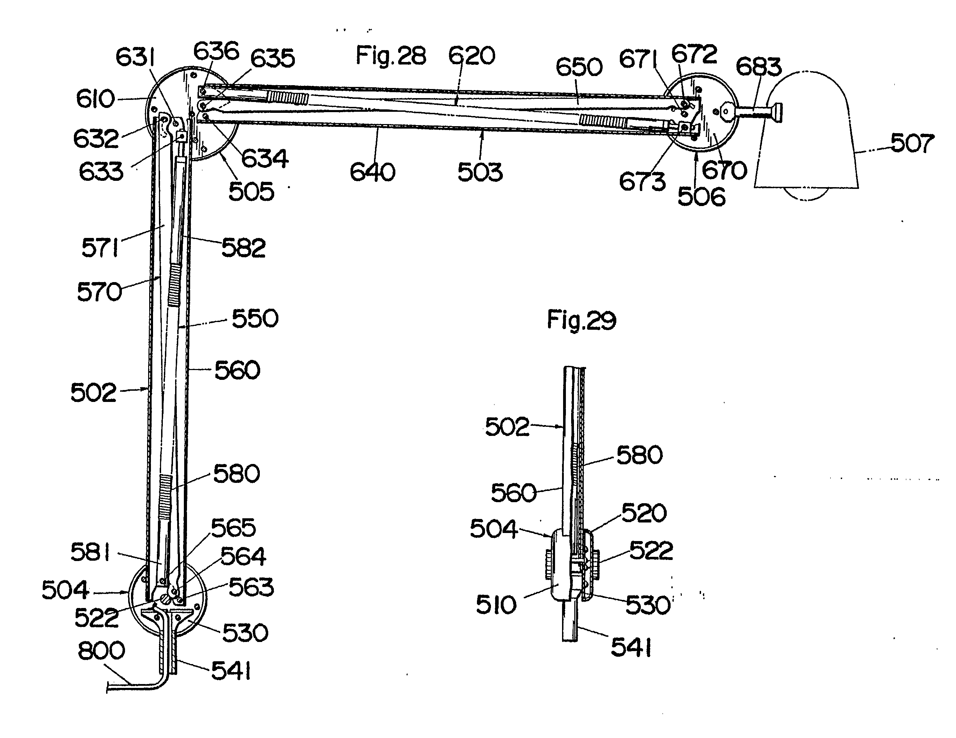

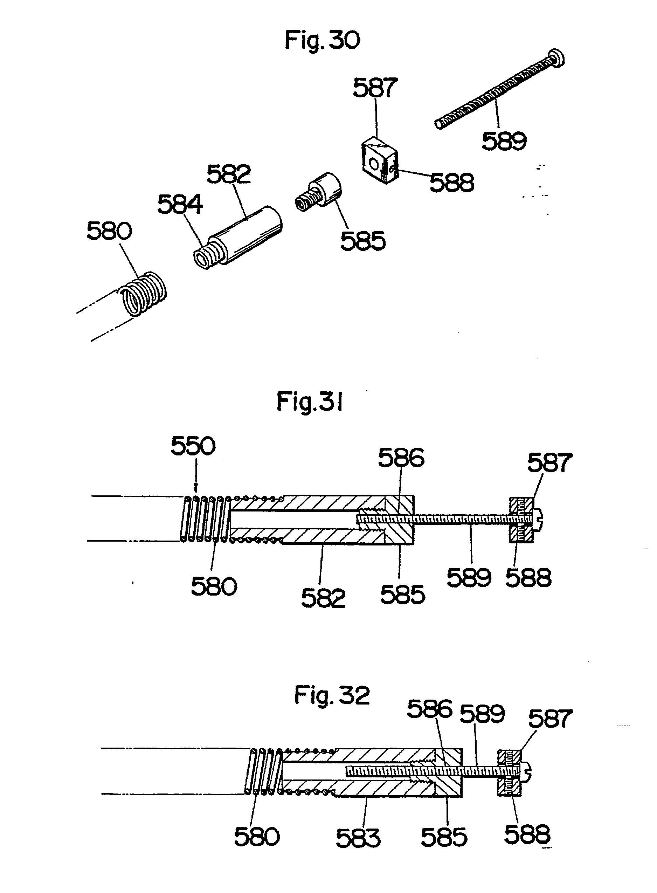

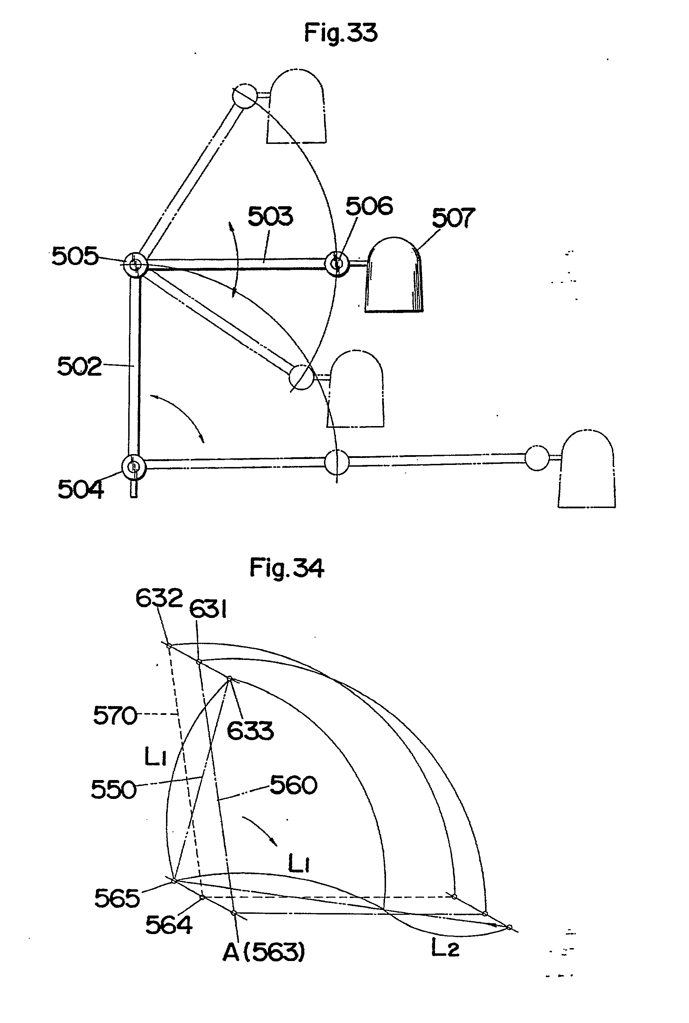

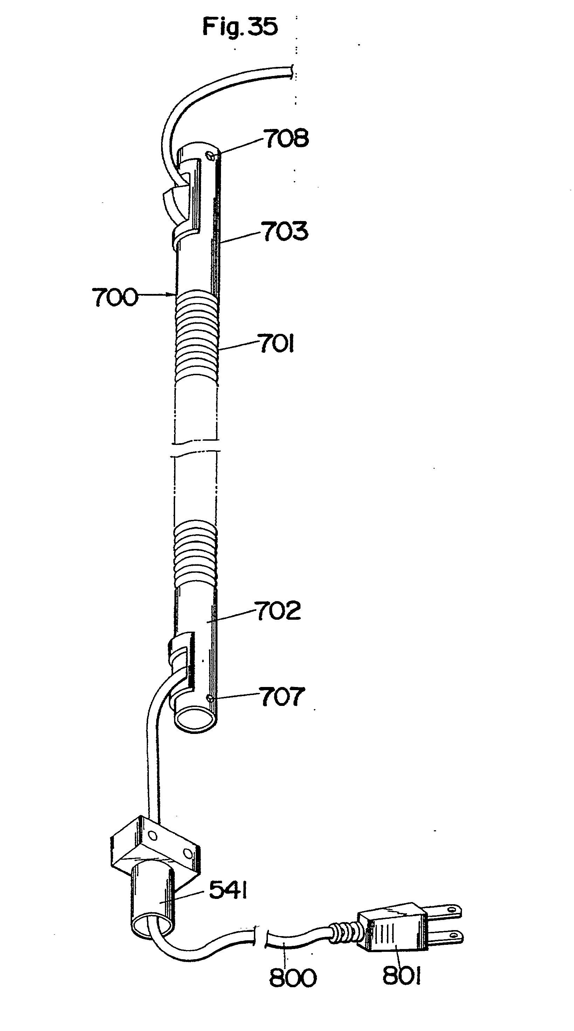

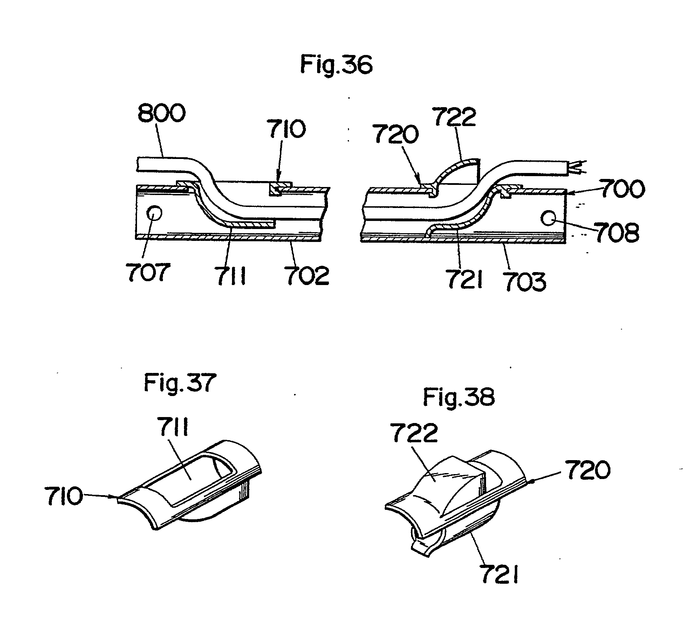

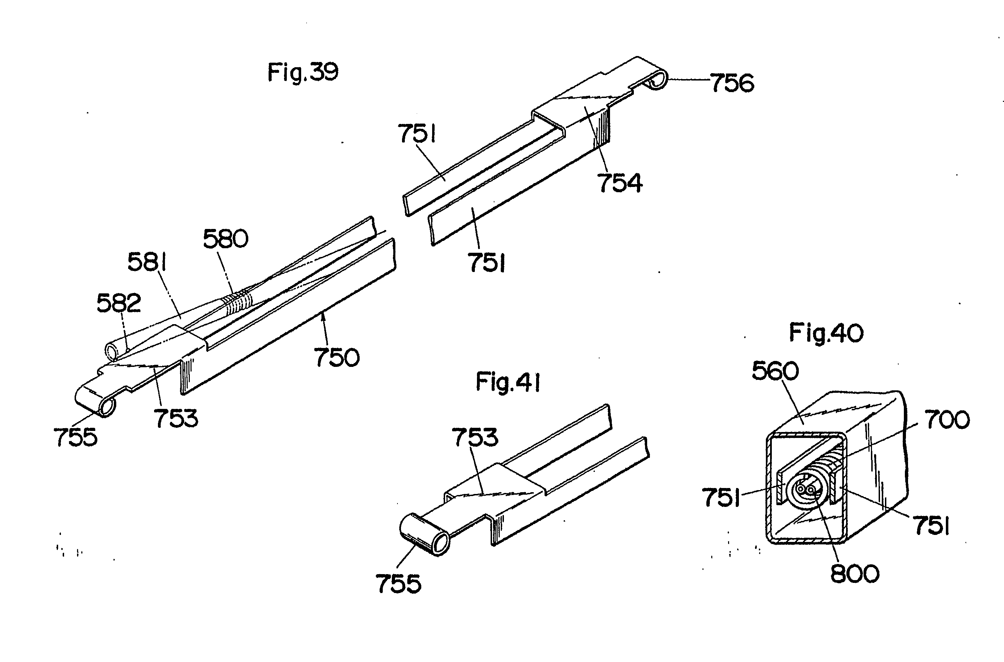

The above-mentioned movable stand with its double-arm assembly may be readily modified to provide a movable stand with a single-arm assembly as shown in Fig. 25. The construction of this modified movable stand is such that the upper arm assembly and the middle bracket are eliminated from the previous embodiment, and in addition the top bracket thereof is directly connected to the lower arm assembly. For practical purposes, this modified movable stand corresponds substantially to the lower arm assembly of the previously described embodiment concerning its construction and function. For this reason and for the sake of clarity, the constituent parts of this modification are designated by the same reference numeral as the counterparts of the above first embodiment with the addition of the lower case letter (a).

As is obvious from the relationship between the double-arm structure and the single-arm structure, the number of arm assemblies may be arbitrarily selected when designing a movable stand: when choosing a plurality of arm assemblies, it is simply necessary to provide the corresponding number of middle brackets.

## Claims

1. A movable stand comprising: a pair of arms (60, 70) and a pair of brackets t4, 5) pivoted together so as to form an arm assembly (2), means (12) to attach one of the brackets (4) to a support, object attaching means (3, 6, 210) to attach the other bracket (5) to an object to be supported by the stand, one of the arms (60) being in the form of a sleeve enclosing the other arm (70), spring means (80) which exerts a counterbalancing spring force upon the pair of said arms (60, 70) for holding the arm assembly (2) at a desired angular position with respect to the support means (12), said spring means (80) being enclosed within said one tubular arm (60) with one end anchored to said other arm (70) and the other end being connected to slider means (83) which is slidable lengthwise with respect to said other arm (70), connecting means (84) connecting the slider means (83) to the adjacent bracket (4) such that when the arm assembly (2) is swung downwardly the spring means (80) is stressed longitudinally of the other arm (70) thereby to transmit to the arm assembly (2) a spring force counterbalancing the gravity force acting on the arm assembly (2), characterized in that said connecting means (84) connects said slider means (83) to said bracket (4) at an angle with respect to the longitudinal axis of said one arm (60), and wherein said one arm (60), said other arm (70) and said connecting means (84) are each pivotally connected to the bracket (4) at respective ones of pivotal connections (50, 35 and 36), said pivotal connection (35) for said other arm (70) being spaced from the pivotal connection (36) for said connecting means (84) and disposed relative thereto on the opposite side of the pivotal connection (50) for said one arm (60).

2. A stand as claimed in claim 1, wherein said spring means (80) for counterbalancing said arm assembly (2) comprises a coil spring arranged around said other arm (70), said slider means (83) being slidable along said other arm (70).

3. A stand as claimed in claim 2, wherein said spring means (80) is a compression spring.

4. A stand as claimed in claim 2, wherein said spring means (80) is a tension spring.

5. A stand as claimed in any one of claims 2 to 4, further comprising at least one further arm assembly (3) having a pair of arms (140, 150) with further spring means (160) associated therewith.

6. A stand as claimed in claim 5, wherein one said arm (140) is formed as a sleeve enclosing the other said arm (150).

7. A stand as claimed in any one of claims 1 to 4, wherein said arm assembly (2) is the sole arm assembly and said object attaching means (210) comprises end attachment means (210a) attached to said other bracket.

8. A stand as claimed in any one of claims 2 to 6 or 7 when dependent on claim 2, characterised in that said other arm (70) has a portion of circular cross section with a diameter slightly less than the diameter of the coil spring (80) arranged therearound, and wherein said slider means (83) comprises a guide bushing (82) mounted on and guided by said circular portion of said other arm (70) said bushing (82) having an outer configuration arranged to be in sliding engagement with an internal surface portion or portions of said one tubular arm (60) in such manner that when the coil spring (80) is stressed longitudinally of the other arm (70) said coil spring (80) is prevented from being substantially distorted laterally thereof during this stressing movement.

9. A stand as claimed in any one of claims 1 to 8, characterised in that said connecting means (84) is arcuate with a convex surface arranged adjacent to the other arm (70) such that the connecting means (84) intersects the longitudinal axis of said one tubular arm (60) at a point displaced towards its pivotal connection (35) with the adjacent bracket (4).

10. A stand claimed in any one of claims 2 to 6, 8 and 9, characterised in that said connecting means (84) is of flat configuration with its flat surface disposed in the plane of the angular movement thereof.

11. A stand as claimed in any one of claims 1 to 10, characterised in that the first bracket (4) comprises a disc (30) and a pair of opposed cup-shaped members (10, 20) which are extensions respectively of said one tubular arm (60) and said suport means (12), and said disc (30) being fixed to said support means (12) through the associated cup-shaped member (10) thereof and carrying a first pivot pin (35) for said pivotal connection (35) with the other arm (70), said cup-shaped members (10, 20) being coaxially pivoted to each other through a second pivot pin (50) which provides for said pivotal connection (50) between said one tubular arm (60) and said disc (30).

12. A stand claimed in claim 11, characterised in that said second pin (50) is associated with friction means (40) which urges said cup-shaped members (10, 20) along the axis of said second pin (50) in order to provide frictional engagement therebetween, said frictional engagement serving to develop a frictional force acting to resist swinging movement of the arm assembly (60, 70) about said second pin (50) with respect to said support means (12).

13. A stand as claimed in claim 12, wherein said friction means (40) includes adjusting means (59) for adjusting the friction force applied between the mating surfaces of said cup-shaped members (10, 20).

14. A stand as claimed in either claim 12 or claim 13, characterised in that said friction means (40) comprises a friction ring (40) interposed between the peripheries of said cup-shaped members (10, 20), said second pin (50) having a head (51) thereof resting on an external surface of one of the cup-shaped members (20), the other end of second pin (50) being formed with a threaded counter bore (54) into which said adjusting screw (59) is screwed such that its head rests on an external curface of the other cup-shaped member (10).

15. A stand as claimed in any one of claims 11 to 14, characterised in that one of said cup-shaped members (20) includes an abutment (25) which is movable therewith and relative to the other cup-shaped member (10), said abutment (25) projecting at a position radially offset from said second pin (50) and being displaceable along an arcuate path formed in the other cup-shaped member (10) so as to be movable within a limited angular range defined by said arcuate path thereby to limit the angular movement of the arm assembly (2) about said second pin (50).

16. A stand as claimed in any one of claims 11 to 15, characterised in that a portion (71) of said other arm (70) extends into and between said cup-shaped members (10, 20), said portion (71) being formed with a flat configuration.

17. A stand as claimed in any one of claims 11 to 16, characterised in that said cup-shaped member (20) associated with the tubular arm (60) is formed with a bushing (402) which communicates with the interior of said one tubular arm (60) for passing an electric cord (400) therethrough from outside of the cup-shaped member (20) to the object supported on the stand for electrical connection therewith.

18. A stand as claimed in any one of claims 5, 6 or 8 to 17 when dependent on claim 5, characterised in that the end attachment (3, 6, 210) includes said further arm assembly (3) and a third bracket (6), one end of each arm (140, 150) being pivotally connected to the second bracket (5) and the other end of each arm (140, 150) being pivotally connected to the third bracket (6), the second bracket thereby serving as a common bracket (5) for both arm assemblies (2, 3).

19. A stand as claimed in claim 18, characterised in that, said common bracket (5) comprises a disc (120) and a pair of opposed cup-shaped members (100, 110) which are extensions respectively of said one tubular arm (60) of said first arm assembly (2) and the one tubular arm (140) of said second arm assembly (3), said disc (120) carrying a first pivot pin (123) for said pivotal connection of the common bracket (5) with the other arm (70), saicl disc (120) being so arranged between the pair of cup-shaped members (100, 110) as to be movable relative thereto; said pair of cup-shaped members (100, 110) being; coaxially pivotal relative to said disc (120) through a second pivot pin (130) which provides for pivotal connection of the one tubular arm (60) of said first arm assembly (2) with the common bracket (5) as well as for pivotal connection of the one tubular arm (140) of said second arm assembly (3) with the common bracket (5), whereby the arrangement permits the second arm assembly (3) to swing with respect to said first arm assembly (2) about said second common pivot pin (130); said disc (120) carrying a third pivot pin (124) for pivotal onnection between the other arm (150) of said second arm assembly (3) and said common bracket (5).

20. A stand as claimed in claim 19, wherein said pair of opposed cup-shaped members (100, 110) are coupled to said disc (120) with a slight clearance left between the outer peripheral portions thereof, one (100) of said pair of cup-shaped members (100, 110) being formed on its outer peripheral portion with a fringe (117) which projects into a recess (118) formed in the confronting surface of the outer periphery of the other (110) of said pair of cup-shaped members such that said clearance has a configuration inhibiting the exposure of the interior of said cup-shaped members (100, 110) through the clearance.

**Patentansprüche**

1. Beweglicher Ständer mit einem Armpaar (60, 70) und einem Trägerpaar (4, 5), die gelenkig miteinander verbunden sind zur Bildung einer Armanordnung (2), Mitteln (12) zur Befestigung eines der Träger (4) an einer Stütze, Objektbefestigungsmitteln (3, 6, 210) zur Befestigung des anderen Trägers (5) an einem vom Stander zu stützenden Gegenstand, wobei einer der Arme (60) in Form einer Hülse den anderen Arm (70) umschließt, mit Federmitteln (80), die eine ausbalancierende Federkraft auf das Armpaar (60, 70) zum Halten der Armanordnung (2) in einer gewünschten Winkelposition bezüglich der Stützmittel (12) aufbringen, wobei die Federmittel (80) innerhalb des einen hülsenartigen Arms (60) angeordnet sind, und ein Ende am anderen Arm (70), und das andere Ende an Gleitmitteln (83) angebracht sind, die bezüglich des anderen Arms (70) in Längsrichtung gleiten, mit Verbindungsmitteln (84) zur Verbindung der Gleitmittel (83) am benachbarten Träger (4) derart, daß bei abwärtigem Schwingen der Armanordnung (2) die Federmittel (80) in Längsrichtung des anderen Arms (70) gespannt werden, wodurch der Armanordnung (2) eine Federkraft übertragen wird, die der auf die Armanordnung (2) wirkenden Gravitationskraft entgegenwirkt, dadurch gekennzeichnet, daß die Verbindungsmittel (84) die Gleitmittel (83) mit dem Träger (4) in einem Winkel zur Längsachse des einen Arms (60) verbinden, und daß dieser eine Arm (60), der andere Arm (70) und die Verbindungsmittel (84) über Gelenkverbindungen (50, 35 und 36) schwenkbar am Träger (4) befestigt sind, wobei die Gelenkverbindung (35) des anderen Arms (70) von der Gelenkverbindung (36) der Verbindungsmittel (84) beabstandet, und auf der relativ dazu entgegengesetzten Seite der Gelenkverbindung (50) des einen Arms (60) angeordnet ist.

2. Ständer nach Anspruch 1, dadurch gekennzeichnet, daß das Federmittel (80) zum Ausbalancieren der Armanordnung (2) eine Spiralfeder umfaßt, die den anderen Arm (70) umgibt, wobei die Gleitmittel (83) entlang dem anderen Arm (70) gleiten.

3. Ständer nach Anspruch 2, dadurch gekennzeichnet, daß das Federmittel (80) eine Druckfeder ist.

4. Ständer nach Anspruch 2, dadurch gekennzeichnet, daß das Federmittel (80) eine Zugfeder ist.

5. Ständer nach einem der Ansprüche 2 bis 4, dadurch gekennzeichnet, daß es zumindest eine weitere Armanordnung (3) mit einem Armpaar (140, 150) mit weiteren, diesen zugeordneten Federmitteln (160) umfaßt.

6. Ständer nach Anspruch 5, dadurch gekennzeichnet, daß ein Arm (140) als Hülse ausgebildet ist, der den anderen Arm (150) umgibt.

7. Ständer nach einem der Ansprüche 1 bis 4, dadurch gekennzeichnet, daß die Armanordnung (2) eine Einzelarmanordnung ist, und die Objektbefestigungsmittel (210) Endbefestigungsmittel (210a) umfassen, die am anderen Träger (5) angebracht sind.

8. Ständer nach einem der Ansprüche 2 bis 6 oder 7, wenn abhängig von Anspruch 2, dadurch gekennzeichnet, daß der andere Arm (70) einen Bereich mit kreisförmigem Querschnitt aufweist, wobei der Durchmesser geringfügig geringer ist als der Durchmesser der um diesen angeordneten Spiralfeder (80), und daß die Gleitmittel (83) eine Leitbuchse (82) umfassen, die angeordnet ist auf und geführt ist von dem kreisförmigen Abschnitt des anderen Arms (70), wobei die Leitbuchse (82) eine äußere Ausbildung aufweist, die in gleitendem Kontakt mit einem inneren Flächenabschnitt oder Abschnitten des einen hülsenartigen Arms (60) derart angeordnet: ist, daß bei Spannung der Spiralfeder (80) in Längsrichtung des anderen Arms (70) verhindert wird, daß die Spiralfeder (80) während dieser Spannungsbewegung erheblich in Querrichtung verzerrt wird.

9. Ständer nach einem der Ansprüche 1 bis 8, dadurch gekennzeichnet, daß die Verbindungsmittel (84) bogenförmig mit einer konvexen Fläche gegenüber dem anderen Arm (70) ausgebildet sind, so daß die Verbindungsmittel (84) die Längsachse des hülsenartigen Arms (60) an einem Punkt kreuzen, der in Richtung der Gelenkverbindung (35) mit dem gegenüberliegenden Träger (4) versetzt ist.

10. Ständer nach einem der Ansprüche 2 bis 6, 8 und 9, dadurch gekennzeichnet, daß die Verbindungsmittel (84) eine flache Ausbildung aufweisen und in der Ebene deren Drehbewegung angeordnet sind.

11. Ständer nach einem der Ansprüche 1 bis 10, dadurch gekennzeichnet, daß der erste Träger (4) eine Scheibe (30) und ein Paar gegenüberliegender topfartiger Bauteile (10, 20) umfaßt, die Fortsätze des einen hülsenartigen Arms (60) und der Stützmittel (12) sind, und die Scheibe (30) an den Stützmitteln (12) durch das zugeordnete topfartige Bauteil (10) befestigt ist, und einen ersten Gelenkzapfen (35) für die gelenkige Verbindung (35) mit dem anderen Arm (70) umfaßt, wobei die topfartigen Bauteile (10, 20) coaxial zueinander mittels eines zweiten Gelenkzapfens (50) drehbar sind, und der Gelenkverbindung (50) zwischen dem einen hülsenartigen Arm (60) und der Scheibe (30) dienen.

12. Ständer nach Anspruch 11, dadurch gekennzeichnet, daß der zweite Gelenkzapfen (50) mit Reibmitteln (40) versehen ist, welche die topfartigen Bauteile (10, 20) entlang der Achse des zweiten Gelenkzapfens (50) zur Erzielung einer reibenden Verbindung zwischen diesen beaufschlagen, wobei die reibende Verbindung der Erzeugung einer Reibkraft dient, um Schwingungsbewegungen der Armanordnung (60, 70) um den zweiten Zapfen (50) bezüglich der Stützmittel (12) zu verhindern.

13. Ständer nach Anspruch 12, dadurch gekennzeichnet, daß die Reibmittel (40) Einstellmittel (59) zur Einstellung der aufgebrachten Reibkraft zwischen den zusammenpassenden Flächen der topfartigen Bauteile (20, 30) umfaßt.

14. Ständer nach Anspruch 12 oder 13, dadurch gekennzeichnet, daß die Reibmittel ( 40 ) einen zwischen den Peripherien der topfartigen Bauteile (10, 20) angeordneten Reibring (40) umfassen, wobei der zweite Zapfen (50) einen Kopf (51) aufweist, der auf einer Außenfläche einer der topfartigen Bauteile (20) ruht, und das andere Ende des zweiten Zapfens (50) mit einer mit einen Gewinde versehenen Gegenbohrung (54) versehen ist, in die eine Stellschraube (51) derart eingeschraubt ist, daß deren Kopf auf der Außenfläche des anderen topfartigen Bauteils (10) ruht.

15. Ständer nach einem der Ansprüche 11 bis 14, dadurch gekennzeichnet, daß einer der topfartigen Bauteile (20) einen Anschlag (25) umfaßt, der mit: diesem und relativ zum anderen topfartigen Bauteil (10) beweglich ist, wobei der Anschlag (25) an einer vom zweiten Zapfen (50) verschiedenen radialen Position hervorsteht und entlang eines bogenförmigen Abschnitts verstellbar ist, der in dem anderen topfartigen Bauteil (10) eingeformt ist, so daß er innerhalb eines begrenzten bogenförmigen Bereichs bewegbar ist, der durch die bogenförmige Bahn definiert ist, um die Drehbewegung der Armanordnung (2) um den zweiten Zapfen (50) zu begrenzen.

16. Ständer nach einem der Ansprüche 11 bis 15, dadurch gekennzeichnet, daß sich ein Abschnitt (71) des anderen Arms (70) in und zwischen die topfartigen Bauteile (10, 20) erstreckt, wobei dieser Abschnitt (71) flach ausgebildet ist.

17. Ständer nach einem der Ansprüche 11 bis 16, dadurch gekennzeichnet, daß das dem hülsenartigen Arm (60) zugeordnete topfartige Bauteil (20) mit einer Leitbuchse (402) ausgebildet ist, die mit dem Inneren des hülsenartigen Arms (60) zur Durchführung eines elektrischen Kabels (400) kommunziert, das für den elektrischen Anschluß von außerhalb des topfartigen Bauteils (20) zu dem vom Ständer gestützten Gegenstand führt.

18. Ständer nach einem der Ansprüche 5, 6 oder 8 bis 17, wenn abhängig von Anspruch 5, dadurch gekennzeichnet, daß die Endbefestigung (3, 6, 210) eine weitere Armanordnung (3) und einen dritten Träger (6) umfaßt, wobei ein Ende jedes Arms (140, 150) drehbar am zweiten Träger (5) angebracht ist, und das andere Ende eines jeden Arms (140, 150) drehbar am dritten Träger (6) angebracht ist, wobei der zweite Träger hierdurch als gemeinsamer Träger (5) für beide Armanordnungen (2, 3) dient.

19. Ständer nach Anspruch 18, dadurch gekennzeichnet, daß der gemeinsame Träger (5) eine Scheibe (120) und ein Paar gegenüberliegender topfförmiger Bauteile (100, 110) umfaßt, die Fortsätze des einen hülsenartigen Arms (60) der ersten Armanordnung (2) bzw. des einen hülsenartigen Arms (140) der zweiten Armanordnung (3) sind, wcbei die Scheibe (120) einen ersten Drehzapfen (123) für dic drehbare Verbindung des gemeinsamen Trägers (5) mit dem anderen Arm (70) aufweist, wobei die Scheibe (120) derart zwischer dem Paar der topfartigen Bauteile (110, 110) angeordnet ist, daß sie relativ zu diesen bewegbar ist; und das Paar der topfartigen Bauteile (100, 110) coaxial relativ zur Scheibe (120) drehbar ist mittels eines zweiten Drehzapfens (130), der der drehbaren Verbindung des einen hülsenartigen Arms (60) der ersten Armanordnung (2) mit dem gemeinsamen Träger (5) und der drehbaren Verbindung des einen hülsenartigen Arms (140) der zweiten Armanordnung (3) mit dem gemeinsamen Träger (5) dient, wobei die Anordnung erlaubt, daß die zweite Armanordnung (3) bezüglich der ersten Armanordnung (2) um den zweiten gemeinsamen Drehzapfen (130) drehbar ist; ferner die Scheibe (120), einen dritten Drehzapfen (124) zur drehbaren Verbindung zwischen dem anderen Arm (150) der zweiten Armanordnung (3) und dem gemeinsamen Träger (5) dient.

20. Ständer nach Anspruch 13, dadurch gekennzeichnet, daß das Paar von gegenüberliegenden topfartigen Bauteilen (100, 110) unter Einhaltung eines geringen Spaltes zwischen ihren äußeren Abschnitten mit der Scheibe (120) gekoppelt sind, wobei ein Bauteil (100) des Paares der topfartigen Bauteile (100, 110) an ihrem äußeren Umfangsabschnitt mit einem Vorsprung (117) versehen ist, der in eine Aussparung (118) eingreift, die auf der angrenzenden Fläche des äußeren Bereichs des anderen (110) des Paares der topfartigen Bauteile eingeformt ist, so daß der Spalt so ausgebildet ist, daß ein Freiliegen des Innenbereichs der topfartigen Bauteile (100, 110) über den Spalt verhindert wird.

## Revendications

1. Pied mobile comprenant:
   - une paire de bras (60, 70) et une paire de noix ou doubles flasques (4, 5) pouvant pivoter ensemble pour former un ensemble de bras (2), un moyen (12) destiné à fixer l'une des noix (4) à un support, un moyen de fixation d'objet (3, 6, 210) destiné à fixer l'autre noix (5) à un ob jet à supporter par le pied,
   - l'un des bras (60) se présentant sous la forme d'un manchon enfermant l'autre bras (70),
   - un moyen de ressort (80) exerçant une force élastique de contrepoids sur la paire de bras (60, 70) pour maintenir l'ensemble de bras (2) dans une position angulaire voulue par rapport au moyen de support (12), ce moyen de ressort (80, étant enfermé dans le bras tubulaire (60) de façon qu'une de ses extrémités soit fixée a l'autre bras (70) et que l'autre extrémité soit reliée à un moyen de curseur (83) pouvant glisser dans le sens de la longueur par rapport à l'autre bras (70),
   - un moyen de liaison (8a) reliant le moyen de curseur (83) à la noix adjacente (4) de façon que lorsqu'on fait basculer l'ensemble de bras (2) vers le bas, le moyen de ressort (80) soit bandé dans le sens longitudinal de l'autre bras (70) pour transmettre ainsi à l'ensemble de bras (2) une force de ressort contrebalançant la force de pesanteur agissant sur l'ensemble de bras (2),

   pied mobile caractérisé en ce que le moyen de liaison (84) relie le moyen de curseur (83) à la noix (4) en formant un certain angle par rapport à l'axe longitudinal du premier bras (60), et en ce que le premier bras (60), l'autre bras (70) et le moyen de liaison (84) sont reliés chacun en pivotement à la noix (4) à l'endroit de l'une, correspondante, de liaisons de pivotement (50, 35 et 36); la liaison de pivotement (35) de l'autre bras (70) étant espacée de la liaison de pivotement (36) du moyen de liaison (84) et disposée, par rapport à celle-ci, du côté opposé de la liaison de pivotement (50) du premier bras (60).

2. Pied selon la revendication 1, caractérisé en ce que le moyen de ressort (80) destiné à contrebalancer l'ensemble de bras (2) est constitué par un ressort hélicoidal disposé autour de l'autre bras (70), le moyen de curseur (83) pouvant glisser le long de cet autre bras (70).

3. Pied selon la revendication 2, caractérisé en ce que le moyen de ressort (80) est un ressort de compression.

4. Pied selon la revendication 2, caractérisé en ce que le moyen de ressort (80) est un ressort de tension.

5. Pied selon l'une quelconque des revendications 2 à 4, caractérisé en ce qu'il comprend en outre au moins un autre ensemble de bras (3) comportant une paire de bras (140, 150) munis d'un autre moyen de ressort (160) associé à ceux-ci.

6. Pied selon la revendication 5, caractérisé en ce que le premier bras (140) est réalisé sous la forme d'un manchon enfermant l'autre bras (150).

7. Pied selon l'une quelconque des revendications 1 à 4, caractérisé en ce que l'ensemble de bras (2) est le seul ensemble de bras, et en ce que le moyen de fixation d'objet (210) comprend un moyen de fixation d'extrémité (210a) fixé à l'autre noix (5).

8. Pied selon l'une quelconque des revendications 2 à 6 ou 7 dépendant de la revendication 2, caractérisé en ce que l'autre bras (70) comporte une partie présentant une section transversale circulaire de diamètre légèrement plus petit que le diamètre du ressort hélicoidal (80) disposé autour de celle-ci, et en ce que le moyen de curseur (83) comprend une bague de guidage (82) montée sur la partie circulaire de l'autre bras (70) et guidée par celle-ci, cette bague (82) présentant une configuration extérieure conçue pour venir glisser contre une ou plusieurs parties de surface intérieure du premier bras tubulaire (60) de façon que lorsqu'on bande le ressort hélicoldal (80) dans le sens longitudinal de l'autre bras (70), on empêche le ressort hélicoidal de se déformer notablement dans le sens transversal pendant ce mouvement permettant de bander le ressort.

9. Pied selon l'une quelconque des revendications 1 à 8, caractérisé en ce que le moyen de liaison (84) est courbe et présente une surface convexe disposée au voisinage de l'autre bras (70) de façon que le moyen de liaison (84) coupe l'axe longitudinal du premier bras tubulaire (60) en un point décalé vers sa liaison de pivotement (35) avec la noix adjacente (4).

10. Pied selon l'une quelconque des revendications 2 à 6, 8 et 9, caractérisé en ce que le moyen de liaison (84) est: de configuration plate, et en ce que sa surface plate est disposée dans le plan de son mouvement angulaire.

11. Pied selon l'une quelconque des revendications 1 à 10, caractérisé en ce que la première noix (4) comprend un disque (30) et une paire d'éléments en forme de coupelle opposés (10, 20) constituant respectivenlent des prolongements du premier bras tubulaire (60) et du moyen de support (12), et en ce que le disque (30) est fixé au moyen de support (12) par l'intennédiaire de l'élément en forme de coupelle associé (10) à celui-ci, et porte une première tige de pivot (35) destinée à la liaison de pivotement (35) avec l'autre bras (70), ces éléments en forme de coupelle (10, 20) pouvant pivoter coaxialement l'un par rapport à l'autre par l'intermédiaire d'une seconde tige de pivot (50) assurant la liaison de pivotement (59) entre le premier bras tubulaire (60) et le disque (30).

12. Pied selon la revendication 11, caractérisé en ce que la seconde tige (50) est associée à un moyen de friction (40) poussant les éléments en forme de coupelle (10, 20) le long de l'axe de la seconde tige (50) pour produire l'engagement de friction entre les deux, cet engagement de friction servant à développer une force de friction destinée à résister au mouvement de balancement de l'ensemble de bras (60, 70) autour de la seconde tige (50), par rapport au moyen de support (12).

13. Pied selon la revendication 12, caractérisé en ce que le moyen de friction (40) comprend un moyen de réglage (59) destiné à régler la force de friction appliquée entre les surfaces correspondantes des éléments en forme de coupelle (10, 20).

14. Pied selon l'une quelconque des revendications 12 et 13, caractérisé en ce que le moyen de friction (40) comprend un anneau de friction (40) interposé entre les périphéries des éléments en forme de coupelle (10, 20), la seconde tige (50) étant munie d'une tête (51) s'appuyant contre une surface extérieure de l'un des éléments en forme de coupelle (20), l'autre extrémité de la seconde tige (50) étant percée d'un contre perçage taraudé (54) dans lequel vient se visser la vis de réglage (59) de façon que sa tête s'appuie contre une surface extérieure de l'autre élément en forme de coupelle (10).

15. Pied selon l'une quelconque des revendications 11 à 14, caractérisé en ce que l'un des éléments en forme de coupelle (20) comprend une butée (25) pouvant se déplacer avec celui-ci et par rapport à l'autre élément en forme de coupelle (10), cette butée (25) faisant saillie en un point décalé radialement par rapport a la seconde tige (50) et pouvant se déplacer le long d'un chemin courbe formé dans l'autre élément en forme de coupelle (10) de manière à pouvoir se déplacer dans une plage angulaire limitée définie par ce chemin courbe, pour limiter ainsi le mouvement angulaire de l'ensemble de bras (2) autour de la seconde tige (50).

16. Pied selon l'une quelconque des revendications 11 à 15, caractérisé en ce qu'une partie (71) de l'autre bras (70) pénètre entre les éléments en forme de coupelle (10, 20), cette partie (71) présentant une configuration plate.

17. Pied selon l'une quelconque des revendications 11 à 16, caractérisé en ce que l'élément en forme de coupelle (20) associé au bras tubulaire (60), comporte un manchon (402) communiquant avec l'intérieur du premier bras tubulaire (60) pour laisser passer à travers celui-ci un cordon électrique (400) provenant de l'exterieur de l'élément en forme de coupelle (20) pour se brancher électriquement à l'objet monté sur le pied.

18. Pied selon l'une quelconque des revendications 5, 6 ou 8 à 17 dépendant de la revendication 5, caractérisé en ce que la fixation d'extrémité (3, 6, 210) comprend l'autre ensemble de bras (3) et une troisième noix (6), une extrémité de chaque bras (140, 150) étant reliée en pivotement à la seconde noix (5) et l'autre extrémité de chaque bras (140, 150) étant reliée en pivotement à la troisième noix (6), la seconde noix servant ainsi de noix commune (5) aux deux ensembles de bras (2, 3).

19. Pied selon la revendication 18, caractérisé en ce que la noix commune (5) comprend un disque (120) et une paire d'éléments en forme de coupelle opposés (100, 110) constituant respectivement des prolongements du premier bras tubulaire (60) du premier ensemble de bras (2) et du premier bras tubulaire (140) du second ensemble de bras (3), le disque (120) portant une première tige de pivot (123) destinée à la liaison de pivotement de la noix commune (5) avec l'autre bras (70), ce disque (120) étant disposé entre la paire d'éléments en forme de coupelle (100, 110) de manière à pouvoir se déplacer par rapport à ceux-ci; la paire d'éléments en forme de coupelle (100, 110) pouvant pivoter coaxialement par rapport au disque (120) par l'intermédiaire d'une seconde tige de pivot (130) assurant la liaison de pivotement du premier bras tubulaire (60) du premier ensemble de bras (2) avec la noix commune (5), ainsi que la liaison de pivotement du premier bras tubulaire (140) du second ensemble de bras (3) avec la noix commune (5), de façon que la disposition permette au second ensemble de bras (3) de se balancer par rapport au premier ensemble de bras (2) autour de la seconde tige de pivot commune (130); le disque (120) portant une troisième tige de pivot (124) destinée à la liaison de pivotement entre l'autre bras (150) du second ensemble de bras (3) et la noix commune (5).

20. Pied selon la revendication 19, caractérisé en ce que la paire d'éléments en forme de coupelle opposés (100, 110) sont couplés au disque (120) en laissant un léger jeu entre leurs parties périphériques extérieures, l'un (100) de la paire d'éléments en forme de coupelle (100, 110) étant muni, sur sa partie périphérique extérieure, d'un bord (117) faisant saillie dans une cavité (118) ménagée dans la surface opposée du pourtour extérieur de l'autre (110) de la paire d'éléments en forme de coupelle, de façon que le jeu présente une configuration évitant d'exposer, par celui-ci, la partie intérieure des éléments en forme de coupelle (100, 110) à l'environnement extérieur.

# Fig. I

# Fig. 2

## Fig. 3

**Fig. 5**

**Fig. 4**

Fig. 6

21

24

26

20

25

27

402

400

Fig. 7

50

51

55   54

**Fig. 8**

**Fig. 9**

## Fig.10

Fig.12

Fig.11

EP 0 255 253 B1

Fig. 13

EP 0 255 253 B1

Fig.15

Fig.14

Fig. 16

Fig. 17

Fig. 18

Fig.19

75

70

73

81

83

80

71

82

72

84

86

Fig.20

264

262

260

250

261

263

265

## Fig. 21

## Fig. 22

Fig.24

70b — 84b

M —

80b

60b

80b

F

84b

P

P

A

Fig. 23

300

302 301 400

**Fig.25**

Fig.26

Fig.27

Fig.28

Fig.29

## Fig. 30

587

589

582

584

588

580

585

## Fig. 31

550

586

587

580

582

585

589

588

## Fig. 32

586 589

587

580

583

585

588

## Fig.33

## Fig.34

## Fig. 35

## Fig.36

800 710 720 722
700
707 711 702 721 703 708

## Fig.37

711
710

## Fig.38

722 720
721

Fig.39

Fig.40

Fig.41